(19) Europäisches Patentamt / European Patent Office / Office européen des brevets

(11) **EP 2 220 803 B1**

(12) **FASCICULE DE BREVET EUROPEEN**

(45) Date de publication et mention de la délivrance du brevet:
**11.06.2014 Bulletin 2014/24**

(21) Numéro de dépôt: **08860362.6**

(22) Date de dépôt: **09.12.2008**

(51) Int Cl.:
*H04B 1/12* [(2006.01)]     *H04B 7/06* [(2006.01)]
*H04B 7/08* [(2006.01)]     *H04L 1/06* [(2006.01)]
*H04L 25/03* [(2006.01)]

(86) Numéro de dépôt international:
**PCT/EP2008/067155**

(87) Numéro de publication internationale:
**WO 2009/074587 (18.06.2009 Gazette 2009/25)**

(54) **RÉDUCTION D'INTERFÉRENCES DANS UN SIGNAL OFDM AVEC DES VECTEURS DE PONDÉRATION ÉVOLUANT DANS DES SOUS-ESPACES VECTORIELS**

STÖRMINDERUNG BEI EINEM OFDM-SIGNAL MIT GEWICHTUNGSVEKTORBILDUNG IN UNTERVEKTORRÄUMEN

REDUCTION OF INTERFERENCE IN AN OFDM SIGNAL WITH WEIGHTING VECTORS EVOLVING IN VECTOR SUBSPACES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.12.2007 FR 0759755**

(43) Date de publication de la demande:
**25.08.2010 Bulletin 2010/34**

(73) Titulaire: **Cassidian SAS**
**78990 Elancourt (FR)**

(72) Inventeurs:
• **FETY, Luc**
  **F-75003 Paris (FR)**
• **MEGE, Philippe**
  **F-92340 Bourg La Reine (FR)**
• **MARTINOD, Laurent**
  **F-78150 Le Chesnay (FR)**

(74) Mandataire: **Bringer, Mathieu et al**
**GEVERS FRANCE**
**9, rue Saint Antoine du T**
**31000 Toulouse (FR)**

(56) Documents cités:
**WO-A-2007/035993**

• **JOONBEOM KIM ET AL: "Robust V-blast MIMO-OFDM channel estimators in time-varying channels using iterativewiener filters" GLOBAL TELECOMMUNICATIONS CONFERENCE (GLOBECOM) HELD IN ST. LOIUS, MO, USA, vol. 6, 28 novembre 2005 (2005-11-28), - 2 décembre 2005 (2005-12-02) pages 3917-3921, XP010881482 PISCATAWAY, NJ, USA ISBN: 978-0-7803-9414-8**

EP 2 220 803 B1

**EP 2 220 803 B1**

## Description

La présente invention concerne une réduction d'interférences dans un signal radioélectrique dont les symboles sont répartis suivant des dimensions fréquentielle et temporelle. Les symboles ont par exemple subi une modulation selon un multiplexage par répartition en fréquences orthogonales OFDM ("Orthogonal Frequency Division Multiplexing" en anglais). Plus particulièrement, l'invention a trait à une réduction itérative d'interférences qui sont mélangées au signal radioélectrique.

L'invention trouve des applications notamment dans le domaine des systèmes de radiocommunications professionnelles PMR ("Professional Mobile Radio" en anglais).

Un signal radioélectrique modulé selon un multiplexage par répartition en fréquences orthogonales OFDM est réparti sur un grand nombre de sous-porteuses dans une bande de fréquence large comparativement à l'espacement entre chaque sous-porteuses. Le signal est ainsi émis par un émetteur sur différentes sous-porteuses de manière à permettre le traitement du signal reçu par un récepteur pour reconstituer le signal émis malgré d'éventuelles interférences destructives dues aux trajets multiples de propagation du signal.

Du bruit et des interférences subis par le signal au cours de sa propagation entre l'émetteur et le récepteur dégradent la réception du signal. Un traitement insuffisant du bruit et des interférences entraîne un taux d'erreur de décodage élevé.

Dans l'état de la technique, le bruit et les interférences peuvent être traités en comparant un signal résultant de la combinaison des signaux reçus respectivement par les antennes à une estimée du signal émis.

On peut voir, par exemple, le document suivant:

Joonbeom Kim et al: "Robust V-blast MIMO-OFDM channel estimators in time-varying channels using iterative Wiener filters", Global Telecommunications Conference (Globecom), tenue à St. Louis, MO, USA, vol. 6, 28 novembre 2005 (2005-11-28) - 2 décembre 2005 (2005-12-02), pages 3917-3921. Lieu de publication: Piscataway, NJ, USA. ISBN: 978-0-7803-9414-8.

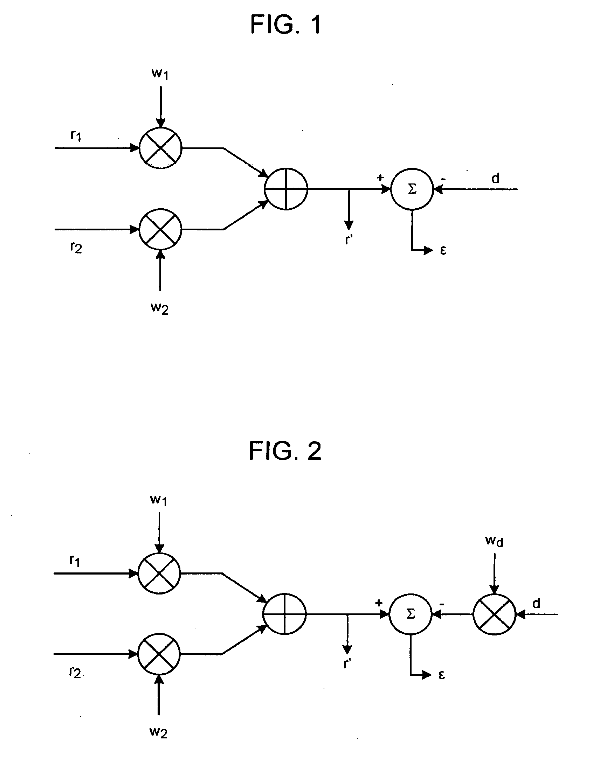

Dans la figure 1, un exemple est donné dans le cas de deux antennes de réception ayant reçu respectivement des signaux $r_1$ et $r_2$. Des pondérations $w_1$ et $w_2$ sont appliquées respectivement aux signaux $r_1$ et $r_2$, puis les deux signaux pondérés sont sommés pour obtenir un signal r' auquel est soustraite une estimée d du signal émis. Une fonction du signal de différence résultant $\varepsilon$ est minimisée. Par exemple, on minimise la somme de la norme au carré des valeurs prises par e pour les symboles d'une trame. Le signal r' est enfin traité pour estimer le signal émis.

L'estimée du signal émis peut être connue a priori du récepteur, c'est le cas par exemple des symboles pilotes insérés dans chaque trame transmise et connus de l'émetteur et du récepteur. L'estimée du signal émis peut aussi être obtenue par un traitement préalable des signaux reçus sur les différentes antennes, par exemple au moyen d'une technique connue sous le nom de MRC ("Maximum Ratio Combining" en anglais).

Le traitement décrit dans la figure 1 peut être appliqué de manière itérative, tout ou partie des données estimées à l'itération i étant utilisées comme estimée d du signal émis pour l'itération suivante i+1. Le bruit et les interférences sont réduits en estimant à chaque itération le signal émis et en faisant, pour chaque symbole de la trame OFDM, la différence entre l'estimée du signal émis et la somme pondérée des signaux respectivement reçus par les antennes jusqu'à ce que cette différence converge vers une valeur limite.

La combinaison des signaux reçus par les différentes antennes permet de supprimer ou de réduire le niveau des interférences restant dans le signal résultant. La comparaison de ce signal pondéré avec le signal émis (plus précisément l'estimée du signal émis) permet d'optimiser les pondérations à appliquer sur chacun des signaux reçus par les différentes antennes de façon à supprimer ou à réduire les interférences présentes.

L'invention a pour objectif d'améliorer la réduction des interférences dans un signal reçu dans un récepteur de radiocommunication numérique afin notamment d'accroître la performance du décodage des symboles du signal reçu et de diminuer le taux d'erreur de décodage.

Pour atteindre cet objectif, un procédé pour réduire des interférences dans au moins deux signaux reçus par un récepteur à travers un canal de propagation, les signaux reçus comprenant chacun des symboles répartis suivant des dimensions fréquentielle et temporelle et correspondant à un même signal émis, est caractérisé en ce qu'il comprend, pour chaque trame de signal reçu, les étapes de :

pondérer les symboles de chaque signal reçu respectivement par des coefficients d'un vecteur de pondération associé à une antenne respective du récepteur et les symboles d'une estimée du signal émis par des coefficients d'un autre vecteur de pondération, les vecteurs de pondération étant chacun un produit d'une matrice rectangulaire ayant un nombre de colonnes inférieur au nombre de lignes et d'un vecteur réduit, les matrices étant déterminées en fonction des contraintes physiques du canal de propagation relatives à l'étalement fréquentiel et à l'étalement temporel,

minimiser une fonction de la différence entre la somme des signaux reçus pondérés et l'estimée du signal émis pondérée afin de déterminer les vecteurs réduits, et

déterminer les vecteurs de pondération en fonction des vecteurs réduits déterminés et estimer le signal émis en fonction des vecteurs de pondération déterminés et des signaux reçus.

Selon l'invention, le signal décodé dans le récepteur devient moins sensible aux interférences dues à des signaux propagés dans des canaux similaires au canal de propagation du signal reçu.

Les matrices sont choisies en fonction des contraintes physiques du canal de propagation relatives à l'étalement fréquentiel et à l'étalement temporel. Selon une réalisation préférée de l'invention, les matrices rectangulaires relatives aux signaux reçus peuvent être identiques puisque les contraintes physiques qui s'y appliquent sont de même nature.

Selon une autre caractéristique de l'invention, pour chaque trame de signal reçu, les symboles de la trame peuvent être ordonnés depuis le premier symbole de chaque sous-porteuse du signal jusqu'au dernier symbole de la sous-porteuse, chaque sous-porteuse étant rangée après la précédente, et les matrices rectangulaires peuvent être des matrices déduites du produit de Kronecker de première et deuxième matrices de Fourier.

Selon l'invention, les matrices relatives aux signaux reçus peuvent être chacune une matrice déduite d'une matrice qui est le produit de Kronecker d'une première matrice dite de la transformée de Fourier [FFT] de dimension $M \times M$ permettant d'exprimer une contrainte sur le profil temporel du canal de propagation observé le long de l'axe fréquentiel, par une deuxième matrice dite de la transformée de Fourier inverse [IFFT] de dimension $N \times N$ permettant d'exprimer une contrainte sur le spectre fréquentiel du canal de propagation observé le long de l'axe temporel.

Selon d'autres caractéristiques de l'invention, pour les matrices rectangulaires relatives aux signaux reçus, les colonnes de la première matrice de Fourier correspondant à des composantes de retard temporel situées au delà d'un étalement temporel maximum du canal de propagation peuvent être supprimées, et pour la matrice rectangulaire relative à l'estimée du signal émis, les colonnes de la première matrice de Fourier correspondant à des composantes de retard temporel situées au delà du double d'un étalement temporel maximum du canal de propagation peuvent être supprimées. Par ailleurs, pour les matrices rectangulaires relatives aux signaux reçus, les colonnes de la deuxième matrice de Fourier correspondant à des composantes de fréquences situées en dehors d'une plage d'étalement fréquentiel du canal de propagation sont supprimées, ladite plage d'étalement fréquentiel dépendant de la fréquence Doppler ($F_{max}$) correspondant à une vitesse maximale de déplacement relatif entre un émetteur et le récepteur, et pour la matrice rectangulaire relative à l'estimée du signal émis, les colonnes de la deuxième matrice de Fourier correspondant à des composantes de fréquences situées en dehors d'une plage correspondant au double d'un étalement fréquentiel du canal de propagation peuvent être supprimées.

En outre, des colonnes peuvent être supprimées dans les deux matrices du produit de Kronecker en respectant les règles décrites ci-dessus.

Selon d'autres caractéristiques de l'invention, l'estimée du signal émis peut comprendre des symboles pilotes et peut comprendre des estimations de symboles émis obtenues par un traitement antérieur. L'estimée du signal émis peut ainsi être obtenue par un traitement préalable des signaux reçus sur les différentes antennes du récepteur, par exemple au moyen d'une technique connue sous le nom de MRC ("Maximum Ratio Combining" en anglais).

Selon une réalisation particulière de l'invention, les valeurs de l'estimée du signal émis peuvent être prises en compte seulement pour certains symboles de la trame de signal reçu, et le procédé peut comprendre une minimisation de la fonction de la différence entre la somme des signaux reçus pondérés et l'estimée du signal émis pondérée, ladite différence étant restreinte auxdits certains symboles de la trame de signal reçu.

Selon l'invention, les étapes de pondérer, minimiser et déterminer peuvent être itératives afin de mieux optimiser la différence entre la somme des deux signaux pondérés et l'estimée du signal émis pondérée et de réduire des erreurs sur l'estimée du signal émis.

La fonction de la différence entre la somme des signaux reçus pondérés et l'estimée du signal émis pondérée peut prendre différentes formes. L'invention vise à réduire cette différence de façon à optimiser un critère comme, par exemple, la maximisation d'un rapport signal sur bruit ou la minimisation d'un taux d'erreurs moyen.

Selon une autre caractéristique de l'invention, le procédé peut comprendre une minimisation de la somme de la norme au carrée des valeurs de la différence entre la somme des signaux reçus pondérés et l'estimée du signal émis pondérée sur l'ensemble des symboles dans la trame de signal reçu, sous la contrainte qu'il existe au moins une combinaison linéaire des composantes des vecteurs réduits qui est constante. Notamment, dans une réalisation particulière de l'invention, une contrainte est de forcer une des composantes du vecteur réduit relatif à l'estimée du signal émis à une valeur constante et la somme de la norme au carré des valeurs de la différence entre la somme des signaux reçus pondérés et l'estimée du signal émis pondérée sur l'ensemble des symboles dans la trame de signal reçu est minimisée sous cette contrainte.

Selon une autre caractéristique de l'invention, le procédé peut comprendre une minimisation de la moyenne des taux d'erreurs binaires estimés après une démodulation des symboles de la trame du signal reçu.

L'invention concerne également un récepteur pour réduire des interférences dans au moins deux signaux reçus par le récepteur à travers un canal de propagation, les signaux reçus comprenant chacun des symboles répartis suivant des dimensions fréquentielle et temporelle et correspondant à un même signal émis. Le récepteur est caractérisé en ce qu'il comprend :

un moyen pour pondérer les symboles de chaque signal reçu respectivement par des coefficients d'un vecteur de pondération associé à une antenne respective du récepteur et les symboles d'une estimée du signal émis par des coefficients d'un autre vecteur de pondération, les vecteurs de pondération étant chacun un produit d'une matrice rectangulaire ayant un nombre de colonnes inférieur au nombre de lignes et d'un vecteur réduit, les matrices étant déterminées en fonction des contraintes physiques du canal de propagation relatives à l'étalement fréquentiel et à l'étalement temporel,

un moyen pour minimiser une fonction de la différence entre la somme des signaux reçus pondérés et l'estimée du signal émis pondérée afin de déterminer les vecteurs réduits, et

un moyen pour déterminer les vecteurs de pondération en fonction des vecteurs réduits déterminés et estimer le signal émis en fonction des vecteurs de pondération déterminés et des signaux reçus.

Enfin, l'invention se rapporte à un programme d'ordinateur apte à être mis en oeuvre dans un récepteur pour réduire des interférences dans au moins deux signaux reçus par le récepteur à travers un canal de propagation, ledit programme comprenant des instructions qui, lorsque le programme est exécuté dans ledit récepteur, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un schéma présentant une approche classique de réduction d'interférences ;
- la figure 2 est un schéma présentant un traitement d'interférences selon l'invention ;
- la figure 3 est un bloc-diagramme schématique d'un récepteur de radiocommunication selon l'invention ; et
- la figure 4 est un algorithme d'un procédé de réduction d'interférences selon l'invention.

De manière générale, l'invention décrite ci-après est relative à un récepteur de radiocommunication dans un réseau de radiocommunication cellulaire numérique. Le récepteur possède au moins deux antennes de réception et communique avec un émetteur à une ou plusieurs antennes d'émission. Par exemple, l'émetteur est une station de base et le récepteur est un terminal mobile.

Selon un premier exemple, le réseau de radiocommunication est un réseau de radiocommunication cellulaire numérique par exemple de type GSM ("Global System for Mobile communications" en anglais), ou UMTS ("Universal Mobile Telecommunications System" en anglais), ou bien un réseau local sans fil de type WLAN ("Wireless Local Area Network" en anglais) ou WIMAX ("World wide Interoperability Microwave Access" en anglais).

Selon un deuxième exemple, le réseau de radiocommunication est un réseau local sans fil adhoc dépourvu d'infrastructure. L'émetteur et le récepteur communiquent directement entre eux de manière spontanée sans l'intermédiaire d'un équipement de centralisation de communication comme un point ou une borne d'accès ou bien une station de base.

Dans le réseau de radiocommunication, des interférences entre symboles dans un signal d'usager et des interférences d'accès multiple entre des signaux de plusieurs usagers sont engendrées par la propagation dans un canal de propagation entre l'émetteur et le récepteur et dégradent la qualité du signal reçu. Ces dégradations peuvent être réduites par une estimation de la fonction de transfert du canal de propagation qui peut être effectuée à l'aide d'information connue par avance du récepteur, comme une séquence pilote transmise en continu par l'émetteur. Le signal reçu comprend alors un signal utile correspondant à des données à transmettre mélangées à des interférences et du bruit additif.

Dans la figure 2, un exemple est donné dans le cas de deux antennes de réception d'un récepteur ayant reçu respectivement des signaux $r_1$ et $r_2$. Des pondérations $w_1$ et $w_2$ sont appliquées respectivement aux signaux $r_1$ et $r_2$, puis les deux signaux pondérés sont sommés pour obtenir un signal r' auquel est soustraite une estimée du signal émis d pondérée par une pondération $w_d$. La différence résultante $\varepsilon$ représente l'erreur dont on minimise une fonction. Le signal r' est enfin traité pour estimer le signal émis.

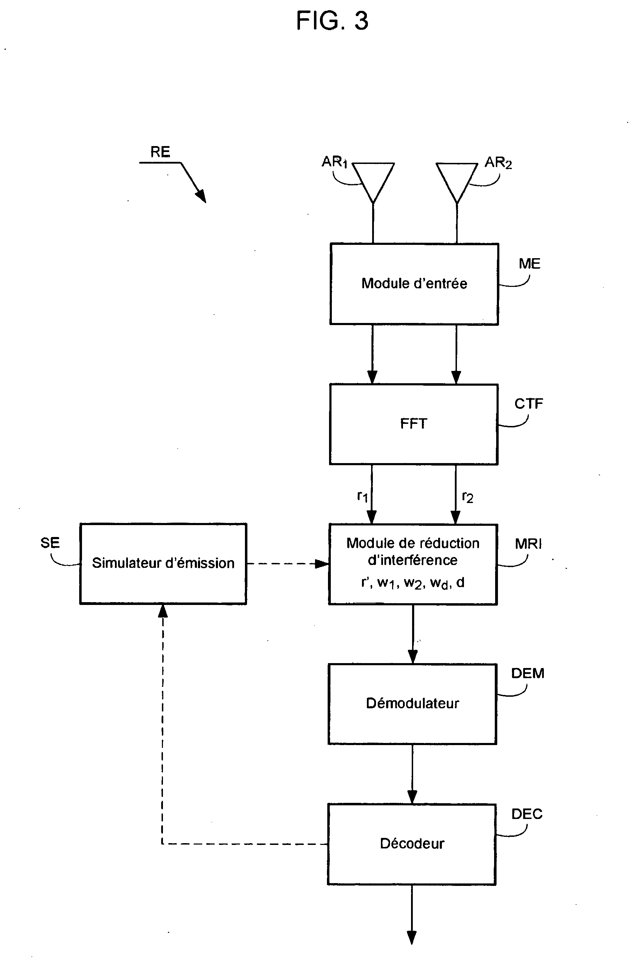

La figure 3 montre des moyens fonctionnels inclus dans un récepteur de radiocommunication RE à plusieurs antennes de réception pour la mise en oeuvre du procédé de l'invention dans un réseau de radiocommunication numérique. Le récepteur RE comprend notamment un module d'entrée ME, un convertisseur temps-fréquence CTF, un module de réduction d'interférence MRI, un démodulateur DEM et un décodeur DEC. Afin de ne pas surcharger la figure 3, on supposera ci-après que le récepteur comprend au moins une première antenne de réception $AR_1$ et une deuxième antenne de réception $AR_2$ reliées au module d'entrée ME.

Un signal reçu par chaque antenne de réception $AR_1$, $AR_2$ du récepteur RE à travers le canal de propagation traverse par exemple dans le module d'entrée ME du récepteur des étages d'amplification, de mise en forme en bande de base, d'échantillonnage et de suppression d'intervalle de garde avant d'être soumis à une transformation de Fourier rapide FFT ("Fast Fourier Transform" en anglais) dans le convertisseur temps-fréquence CTF pour passer le signal reçu du domaine temporel au domaine fréquentiel. Chaque échantillon du domaine fréquentiel est appelé sous-porteuse. De manière générale, le convertisseur CTF applique un filtrage temporel adapté en réception au signal reçu avant que ce dernier ne subisse la transformation de Fourier rapide.

Le signal reçu par chaque antenne du récepteur est émis par l'émetteur sous la forme de trames successives (nommées trames OFDM) comprenant des symboles répartis suivant une dimension temporelle et une dimension fréquentielle, c'est-à-dire suivant un axe de temps et suivant un axe de fréquence. Par exemple, le signal est émis sur M sous-porteuses dans une trame divisée en N intervalles de temps de symbole consécutifs dédiés chacun à la transmission de M symboles.

Le canal de propagation entre une antenne d'émission et une antenne de réception $AR_1$, $AR_2$ peut être modélisé par des coefficients complexes $\alpha_{m,n,1}$, $\alpha_{m,n,2}$ de la fonction de transfert du canal de propagation associés respectivement à des sous-porteuses m, avec $0 \leq m \leq M-1$, pour un intervalle de temps donné n, avec $0 \leq n \leq N-1$.

A la sortie du convertisseur temps-fréquence CTF est fourni un signal reçu $r_1$ pour la première antenne de réception $AR_1$ dont chaque symbole $r_{m,n,1}$ reçu au $n^{ième}$ intervalle de temps donné sur la $m^{ième}$ sous-porteuse peut être donné par la relation suivante :

$$r_{m,n,1} = \alpha_{m,n,1} \times s_{m,n} + \beta_{m,n,1} \times u_{m,n} + b_{m,n,1}.$$

$s_{m,n}$ est un symbole de signal utile reçu au $n^{ième}$ intervalle de temps donné sur la $m^{ième}$ sous-porteuse. $\beta_{m,n,1} \times u_{m,n}$ est le produit d'un symbole $u_{m,n}$ d'un signal d'interférence par un coefficient de transfert $\beta_{m,n,1}$ du canal de propagation associé au signal d'interférence. Le produit $\beta_{m,n,1} \times u_{m,n}$ représente des interférences intracellulaires et/ou intercellulaires reçues au $n^{ième}$ intervalle de temps donné sur la $m^{ième}$ sous-porteuse par la première antenne de réception $AR_1$. Le signal d'interférence est supposé être de même nature que le signal utile. Le terme $b_{m,n}$ représente le bruit blanc gaussien additif reçu au $n^{ième}$ intervalle de temps donné sur la $m^{ième}$ sous-porteuse par la première antenne de réception $AR_1$. Le symbole reçu $r_{m,n,1}$ est un élément d'une matrice $r_1$ représentant les symboles du signal reçu par la première antenne :

$$r_1 = \begin{bmatrix} r_{0,0,1} & r_{0,1,1} & \cdots & r_{0,N-1,1} \\ r_{1,0,1} & r_{1,1,1} & \cdots & r_{1,N-1,1} \\ \cdots & \cdots & r_{m,n,1} & \cdots \\ r_{M-1,0,1} & r_{M-1,1,1} & \cdots & r_{M-1,N-1,1} \end{bmatrix} \in C^{N \times M}.$$

A la sortie du convertisseur temps-fréquence CTF est également fourni un signal reçu $r_2$ pour la deuxième antenne de réception $AR_2$ dont la forme est semblable à celle du signal reçu $r_1$ pour la première antenne de réception $AR_1$ et dont chaque symbole $r_{m,n,2}$ reçu au $n^{ième}$ intervalle de temps donné sur la $m^{ième}$ sous-porteuse est donné par la relation suivante :

$$r_{m,n,2} = \alpha_{m,n,2} \times s_{m,n} + \beta_{m,n,2} \times u_{m,n} + b_{m,n,2}.$$

Selon l'invention, le signal reçu $r_1$ par la première antenne $AR_1$ peut être représenté sous forme d'une matrice diagonale $R_1$ de dimension NM $\times$ NM dont les éléments de la diagonale correspondent respectivement aux éléments de la matrice $r_1$ lus ligne par ligne :

$$R_1 = \begin{bmatrix} r_{0,0,1} & 0 & & \cdots & & & & & 0 \\ 0 & \ddots & 0 & & & & & & \\ & 0 & r_{0,N-1,1} & 0 & & & & & \\ & & 0 & \ddots & 0 & & & & \vdots \\ \vdots & & & 0 & r_{m,n,1} & 0 & & & \\ & & & & 0 & \ddots & 0 & & \\ & & & & & 0 & r_{M-1,0,1} & 0 & \\ & & & & & & 0 & \ddots & 0 \\ 0 & & \cdots & & & & & 0 & r_{M-1,N-1,1} \end{bmatrix}.$$

Selon l'invention, le signal reçu $r_2$ par la deuxième antenne $AR_2$ peut également être représenté sous forme d'une matrice diagonale $R_2$ de dimension $NM \times NM$ de la même manière que le signal reçu $r_1$.

Les coefficients $\alpha_{m,n,1}$, $\alpha_{m,n,2}$ sont les éléments d'une matrice diagonale respective $\alpha_1$, $\alpha_2$ de dimension $NM \times NM$ de la fonction de transfert du canal de propagation associé au signal utile entre l'antenne d'émission respective et l'antenne de réception $AR_1$, $AR_2$. De même, les coefficients $\beta_{m,n,1}$, $\beta_{m,n,2}$ sont les éléments d'une matrice diagonale $\beta_1$, $\beta_2$ de dimension $NM \times NM$ de la fonction de transfert du canal de propagation associé au signal d'interférence entre l'antenne d'émission respective et l'antenne de réception $AR_1$, $AR_2$. Par ailleurs, les symboles $s_{m,n}$ et $u_{m,n}$ sont les éléments respectivement d'une matrice s et d'une matrice diagonale u de dimension $NM \times NM$ représentant respectivement le signal utile et le signal d'interférence.

Cette présente convention d'écriture est retenue dans la suite de la description.

En variante, le signal reçu par la première antenne ou la deuxième antenne peut être représenté sous forme d'une matrice diagonale de dimension $NM \times NM$ dont les éléments correspondent respectivement aux éléments de la matrice r lus colonne par colonne.

Le module de réduction d'interférence MRI effectue une série d'opérations sur le signal reçu pour réduire les interférences mélangées au signal utile. Le module MRI pondère les signaux reçus $r_1$ et $r_2$ respectivement, sous la forme des matrices diagonales $R_1$ et $R_2$ respectivement, par des vecteurs de pondération $w_1$ et $w_2$, dans lesquels sont rangés successivement les pondérations relatives aux symboles de la première sous-porteuse en commençant par celle correspondant au premier temps symbole, puis les pondérations relatives aux symboles des sous-porteuses successives. Le module MRI somme les vecteurs résultants pour former un signal reçu combiné r', sous la forme d'un vecteur R', selon la relation suivante :

$$R' = R_1.w_1 + R_2.w_2.$$

Dans le cas où seul un signal d'interférence présent et en l'absence de bruit, on a :

$$R' = s.(\alpha_1 w_1 + \alpha_2 w_2) + u.(\beta_1 w_1 + \beta_2 w_2).$$

Par ailleurs, le module MRI pondère une estimée d du signal émis, sous forme d'une matrice diagonale de dimension $NM \times NM$, par un vecteur de pondération $w_d$. Dans le cas où seul un signal d'interférence est présent et en l'absence de bruit, le vecteur de pondération $w_d$ est égal à l'expression $\alpha_1 w_1 + \alpha_2 w_2$.

Le signal combiné R' peut donc, dans ce cas, s'écrire sous la forme : $R' = s.w_d + u.(\beta_1 w_1 + \beta_2 w_2)$.

L'estimée d du signal émis comprend des symboles de référence qui sont connus par avance du récepteur RE, tels que des symboles pilotes, et/ou des symboles de référence pour lesquels le récepteur a une connaissance suffisamment fiable, tels que par exemple des symboles, estimés au cours d'un traitement antérieur, ayant une vraisemblance supérieure à un seuil prédéterminé. La position des symboles pilotes parmi les M sous-porteuses et les N intervalles de temps est connue du récepteur. Outre les symboles de référence, l'estimée d du signal émis comprend d'autres symboles ayant une valeur nulle.

L'estimée d du signal émis peut être représentée par une matrice diagonale de dimension NM × NM dont les éléments de la diagonale sont pour partie les symboles de référence ayant une valeur non nulle et dont les autres éléments de la diagonale sont nuls. Par exemple, si l'estimée d du signal émis comprend seulement des symboles pilotes, la diagonale de la matrice d comprend seulement quelques valeurs non nulles correspondant aux symboles pilotes. Si tous les symboles du signal émis ont été estimés dans un traitement antérieur avec une vraisemblance supérieure au seuil prédéterminé, l'estimée d du signal émis comprend tous ces symboles estimés, et la diagonale de la matrice d est totalement remplie de valeurs non nulles correspondant à ces symboles estimés.

Le module de réduction d'interférence MRI détermine une erreur c sur la différence entre le signal reçu combiné R' et un signal correspondant à l'estimée du signal émis pondérée $d.w_d$, selon la relation suivante :

$$\varepsilon = R' - d.w_d.$$

Dans le cas où seul un signal d'interférence est présent et en l'absence de bruit, on a :

$$\varepsilon = (s - d).w_d + u.(\beta_1 w_1 + \beta_2 w_2).$$

Donc, dans ce cas, si l'estimée d du signal émis est égale au signal émis s, c'est-à-dire si l'estimée du signal émis est strictement identique au signal réellement émis, alors, pour chaque symbole reçu au $n^{ième}$ intervalle de temps et sur la $m^{ième}$ sous-porteuse, on a :

$$w_{n,m,1} = \beta_{n,m,2};$$

$$w_{n,m,2} = -\beta_{n,m,1};$$

et

$$w_{n,m,d} = \beta_{n,m,2}.\alpha_{n,m,1} - \beta_{n,m,1}.\alpha_{n,m,2}.$$

Selon l'invention, les vecteurs $w_1$, $w_2$ et $w_d$ possèdent chacun autant de composantes qu'il y a de symboles dans la trame OFDM considérée, et sont choisis dans un sous-espace vectoriel.

Ainsi, on impose les représentations matricielles suivantes qui permettent de résoudre plus aisément le problème posé :

$$w_1 = B.a_1,$$

$$w_2 = C.a_2,$$

et

$$w_d = D.a_d,$$

où B, C et D sont des matrices rectangulaires dont le nombre de colonnes est inférieur au nombre de lignes. Les matrices B, C et D définissent chacune la base de vecteurs du sous-espace vectoriel. Le choix de la base définissant le sous-espace vectoriel est effectué de façon à ce que les vecteurs du sous-espace vectoriel répondent aux contraintes physiques du canal de propagation, telles qu'une valeur maximale de l'étalement fréquentiel et une valeur maximale de l'étalement temporel.

Les matrices B, C et D peuvent être déterminées de différentes manières. Dans une réalisation préférée de l'invention, les matrices B et C sont deux matrices identiques, les contraintes physiques qui s'y appliquent étant du même type.

Selon l'invention, le module MRI réduit l'erreur $\varepsilon$ en déterminant les vecteurs de pondération $w_1$, $w_2$ et $w_d$ qui minimisent une fonction de l'erreur $\varepsilon$. Le signal r' est alors traité pour estimer le signal émis.

Le traitement décrit précédemment peut être appliqué de manière itérative, tout ou partie des données estimées à l'itération i étant utilisée comme estimée d du signal émis pour l'itération suivante i+1. Le bruit et les interférences sont réduits en estimant à chaque itération le signal émis et en faisant, pour chaque symbole de la trame OFDM, la différence entre l'estimée du signal émis pondérée et la somme pondérée des signaux reçus respectivement par les antennes jusqu'à ce que cette différence converge vers une valeur limite.

Après avoir déterminé les vecteurs de pondération, le module MRI égalise les symboles du signal combiné r' en fonction des vecteurs de pondération $w_1$, $w_2$ et $w_d$ en des symboles égalisés. Les vecteurs de pondération $w_1$ et $w_2$ permettent de déterminer le signal combiné r' selon la relation suivante : $R' = R_1.w_1 + R_2.w_2$. Par exemple, un symbole égalisé dépend de la division du symbole du signal combiné r' par un élément correspondant du vecteur de pondération $w_d$, sachant, de façon illustrative, que le signal combiné r' peut s'écrire, lorsque seul un signal d'interférence est présent en plus du signal utile et donc en l'absence de bruit, selon la relation suivante : $R' = s.w_d + u. (\beta_1.w_1 + \beta_2.w_2)$, avec des interférences réduites par la minimisation de l'expression $(\beta_1.w_1 + \beta_2.w_2)$. Lorsque du bruit est également présent, cette expression reste une approximation valable puisque dans le signal r', le signal émis s pondéré par $w_d$ est présent avec le bruit et le reliquat des interférences, ces deux derniers éléments étant minimisés par le traitement effectué selon l'invention.

Les symboles égalisés sont démodulés par le démodulateur DEM en des bits démodulés selon le type de modulation utilisé à l'émission. Le démodulateur DEM détermine en outre une vraisemblance de chaque bit démodulé. La vraisemblance d'un bit a une valeur "douce" ("soft value") négative ou positive (flottante), par comparaison à une valeur "dure" ("hard value") telle que la valeur binaire "1" ou "0", pour indiquer que le démodulateur DEM délivre des valeurs flottantes réelles ayant chacune un signe qui impose une décision ultérieure sur l'état du bit correspondant, c'est-à-dire une décision sur la valeur "dure" "0" ou "1".

Le démodulateur DEM qui n'a effectué aucune décision pour déterminer des valeurs binaires "dures" "0" ou "1" fournit en série les valeurs numériques de vraisemblance des bits démodulés au décodeur DEC, ces valeurs étant par exemple comprises entre -1 et +1 selon une norme prédéterminée.

Optionnellement, un désentrelaceur effectue un désentrelacement des vraisemblances des bits démodulés selon un algorithme de désentrelacement de canal réciproque à un algorithme d'entrelacement de canal utilisé dans un entrelaceur de l'émetteur, afin d'inhiber l'entrelacement introduit à l'émission du signal.

Le décodeur DEC décode les bits démodulés, éventuellement désentrelacés, fournis par le démodulateur DEM en fonction des vraisemblances précédemment déterminées. Le décodeur DEC effectue une décision dure et délivre des bits décodés, selon le décodage correspondant au codage utilisé à l'émission du signal, par exemple selon un décodage convolutif qui corrige les erreurs au moyen de l'algorithme de Viterbi.

Optionnellement, le récepteur RE comprend en outre un simulateur d'émission SE pour reconstruire le signal reçu sans bruit ni interférence, c'est-à-dire le signal émis correspondant. Par exemple, le simulateur d'émission SE inclut un codeur, optionnellement un entrelaceur, un modulateur et un convertisseur fréquence-temps.

Le décodeur DEC fournit en sortie des bits, sur lesquels a été effectuée une décision dure, au simulateur d'émission SE afin que ce dernier simule une chaîne d'émission de l'estimée d du signal émis décrit précédemment et correspondant au signal supposé reçu sans bruit ni interférence.

A cette fin dans le simulateur d'émission SE, les bits issus du décodeur DEC sont appliqués au codeur, avant d'être optionnellement entrelacés par l'entrelaceur. Puis ces bits sont fournis au modulateur pour former des symboles estimés $d_{m,n}$ de l'estimée d du signal émis, avec $0 \le m \le M-1$ et $0 \le n \le N-1$, correspondant respectivement aux symboles reçus qui n'auraient subi aucune déformation de canal. En d'autres termes, chaque symbole estimé $d_{m,n}$ est une meilleure hypothèse d'un symbole émis respectif $s_{m,n}$ et correspond aux bits d'un symbole reçu respectif issus du décodeur DEC. Chaque symbole estimé $d_{m,n}$ est un symbole de signal supposé reconstruit sans bruit ni interférence déduit d'un symbole reçu respectif du signal reçu décodé.

Les symboles estimés $d_{m,n}$ peuvent être appliqués à un convertisseur fréquence-temps et subir notamment une transformation de Fourier rapide inverse IFFT ("Inverse Fast Fourier Transform" en anglais) pour passer le signal comprenant les symboles estimés $d_{m,n}$ du domaine fréquentiel au domaine temporel, et un filtrage temporel en émission. Le convertisseur fréquence-temps fournit en sortie une estimée comprenant les symboles estimés à un deuxième convertisseur temps-fréquence qui applique à l'estimée du signal émis un filtrage temporel en réception adapté au filtrage temporel en émission, puis une transformation de Fourier rapide FFT pour passer l'estimée du signal émis du domaine temporel au domaine fréquentiel, d'une manière similaire au filtrage et à la transformation dans le convertisseur CTF. Le deuxième convertisseur temps-fréquence fournit une estimée du signal émis comprenant des symboles estimés $d_{m,n}$ au module de réduction d'interférence MRI.

La matrice diagonale représentant l'estimée d du signal émis a des valeurs non nulles qui correspondent seulement aux symboles suffisamment fiables, un tel symbole ayant par exemple une vraisemblance globale qui est le produit des vraisemblances associées respectivement aux bits du symbole et qui est supérieure à un seuil prédéterminé.

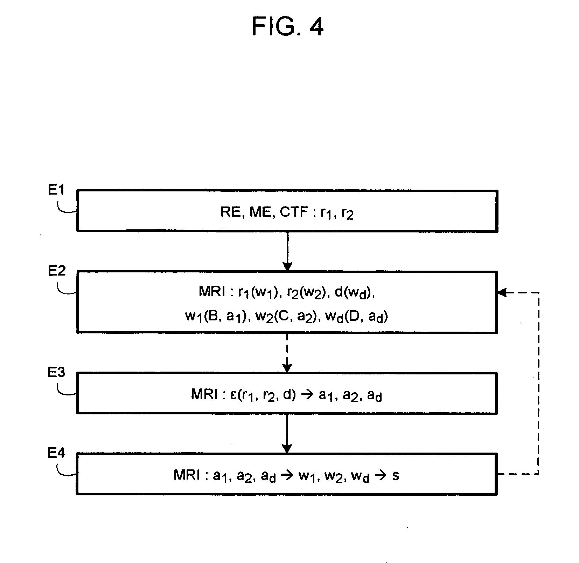

En référence à la figure 4, le procédé de réduction d'interférence selon l'invention comprend des étapes E1 à E4 exécutées automatiquement dans le récepteur RE.

A l'étape E1, chaque antenne de réception $AR_1$, $AR_2$ du récepteur RE reçoit un signal $r_1$, $r_2$ respectif qui a été émis par un émetteur sous la forme de trames successives comprenant des symboles répartis suivant des dimensions fréquentielle et temporelle. Le signal est émis par exemple sur M sous-porteuses dans une trame divisée en N intervalles de temps de symbole, par exemple selon une modulation à multiplexage par répartition en fréquences orthogonales OFDM. Comme expliqué précédemment, chaque signal reçu est appliqué au module d'entrée ME et au convertisseur temps-fréquence CTF pour passer le signal reçu du domaine temporel au domaine fréquentiel et le signal reçu est représenté sous forme d'une matrice diagonale de dimension $NM \times NM$.

A l'étape E2, le module de réduction d'interférence MRI pondère les signaux reçus $r_1$ et $r_2$ respectivement par des vecteurs de pondération $w_1$ et $w_2$ dont le contenu est à déterminer et somme les signaux $r_1$ et $r_2$ pondérés pour former un signal combiné r'. Par ailleurs, le module MRI pondère une estimée d du signal émis, comprenant par exemple des symboles pilotes, par un vecteur de pondération $w_d$ dont le contenu est à déterminer. Les vecteurs $w_1$, $w_2$ et $w_d$ sont des vecteurs colonnes contenant chacun autant de lignes que le signal reçu dans une trame contient de symboles, soit N x M lignes.

Les vecteurs de pondération $w_1$ et $w_2$ s'expriment respectivement comme le produit d'une matrice B et d'un vecteur réduit $a_1$ et comme le produit d'une matrice C et d'un vecteur réduit $a_2$ selon les relations suivantes :

$$w_1 = B.a_1;$$

et

$$w_2 = C.a_2.$$

De même, le vecteur de pondération $w_d$ s'exprime comme le produit d'une matrice D et d'un vecteur réduit $a_d$ selon la relation suivante :

$$w_d = D.a_d.$$

Les matrices B, C et D sont des matrices rectangulaires dont le nombre de colonnes est inférieur au nombre de lignes.

Les vecteurs réduits $a_1$, $a_2$ et $a_d$ sont des vecteurs colonnes dont le nombre de coefficients est inférieur au nombre de symboles que le signal reçu contient dans une trame.

Les matrices B et C définissent chacune un sous-espace vectoriel représentant les variations temporelles et fréquentielles du canal de propagation. Puisque les contraintes sont les mêmes pour les matrices B et C, ces deux matrices sont choisies de préférence identiques.

La matrice D définit un sous-espace vectoriel représentant les variations temporelles et fréquentielles du produit de deux canaux de. propagation. La matrice D est homogène au produit du canal de propagation associé au signal utile et du canal de propagation associé au signal d'interférence.

Par exemple, la matrice B peut être une matrice déduite d'une matrice K qui est le produit de Kronecker d'une première matrice dite de la transformée de Fourier [FFT] de dimension $M \times M$ permettant d'exprimer une contrainte sur le profil temporel du canal de propagation observé le long de l'axe fréquentiel (sur l'un quelconque des intervalles de temps), par une deuxième matrice dite de la transformée de Fourier inverse [IFFT] de dimension $N \times N$ permettant d'exprimer une contrainte sur le spectre fréquentiel du canal de propagation observé le long de l'axe temporel (sur l'une quelconque des sous-porteuses).

La matrice K peut être écrite sous la forme suivante :

K = [FFT]x[IFFT], où l'opérateur $\times$ représente conventionnellement le produit de Kronecker de deux matrices.

La matrice K peut être écrite également sous la forme suivante :

$$K = \begin{bmatrix} [IFFT].FFT(0,0) & \cdots & [IFFT].FFT(0, M-1) \\ \vdots & \ddots & \vdots \\ [IFFT].FFT(M-1,0) & \cdots & [IFFT].FFT(M-1, M-1) \end{bmatrix},$$

où

$$[IFFT] = \begin{bmatrix} IFFT(0,0) & \cdots & IFFT(0, N-1) \\ \vdots & \ddots & \vdots \\ IFFT(N-1,0) & \cdots & IFFT(N-1, N-1) \end{bmatrix},$$

et

$$[FFT] = \begin{bmatrix} FFT(0,0) & \cdots & FFT(0, M-1) \\ \vdots & \ddots & \vdots \\ FFT(M-1,0) & \cdots & FFT(M-1, M-1) \end{bmatrix}.$$

Par exemple, la matrice [FFT] s'écrit :

$$[FFT] = \begin{bmatrix} 1 & 1 & \cdots & 1 \\ 1 & e^{\frac{-2i\pi}{M}} & \cdots & e^{\frac{-2i\pi(M-1)}{M}} \\ \vdots & \vdots & \cdots & \vdots \\ 1 & e^{\frac{-2i\pi(M-1)}{M}} & \cdots & e^{\frac{-2i\pi(M-1)^2}{M}} \end{bmatrix}.$$

La matrice [IFFT] est la matrice conjuguée d'une matrice [FFT] de dimension N × N. Par exemple, le terme IFFT(0,0) est égal à "1" et le terme IFFT(n,N) est égal à "exp((2πin(N-1))/N)", où i est le nombre complexe racine carrée de "-1".

Dans les matrices B et C sont supprimées des colonnes et dans les vecteurs réduits associés $a_1$ et $a_2$ sont également supprimées les lignes correspondantes aux colonnes supprimées des matrices B et C. De même, dans la matrice D sont supprimées des colonnes et dans le vecteur réduit associé $a_d$ sont également supprimées les lignes correspondantes aux colonnes supprimées de la matrice D. Les matrices B, C et D sont donc des matrices rectangulaires ayant N × M lignes et un nombre de colonnes inférieur à N × M.

Les colonnes des matrices B, C et D sont supprimées en fonction d'au moins l'un des paramètres des canaux de propagation entre l'émetteur et les antennes de réception $AR_1$ et $AR_2$ du récepteur, relatifs à des contraintes physiques des canaux de propagation. Ces contraintes physiques sont par exemple, d'une part l'étalement fréquentiel maximum du canal de propagation lorsqu'on observe celui-ci le long de l'axe des temps sur l'une quelconque des sous-porteuses et qu'on en prend la transformée de Fourier pour obtenir son spectre fréquentiel, d'autre part l'étalement temporel maximum du canal de propagation lorsqu'on observe celui-ci le long de l'axe des fréquences pour l'un quelconque des intervalles de temps et qu'on en prend la transformée de Fourier inverse pour obtenir son profil temporel.

Selon une modulation à multiplexage par répartition en fréquences orthogonales OFDM, la largeur de la bande de fréquence des M sous-porteuses est très inférieure à la fréquence Fp de la porteuse du signal émis qui est la moyenne des fréquences de sous-porteuses respectives. La bande de fréquence des M sous-porteuses est par exemple centrée sur la fréquence Fp de la porteuse du signal. Par exemple, la fréquence de la porteuse est de 3 GHz et le pas fréquentiel entre deux sous-porteuses consécutives est de 10 kHz.

De même, selon une modulation à multiplexage par répartition en fréquences orthogonales OFDM, les N symboles associés à une porteuse du signal sont reçus successivement et régulièrement pendant N intervalles de temps respectifs et correspondent à la réception du signal émis selon plusieurs trajets de propagation possédant chacun un retard de propagation associé.

Une contrainte physique du canal de propagation relative à la fréquence est par exemple une fréquence de Doppler maximale $F_{max}$ qui dépend d'une vitesse maximale $V_{max}$ de déplacement relatif entre un émetteur et le récepteur RE et de la fréquence de la porteuse Fp, la vitesse maximale de déplacement $V_{max}$ étant par exemple égale à 200 Km/h. La fréquence de Doppler maximale $F_{max}$ vaut $F_{max} = (V_{max}/c)Fp$, où c est la vitesse de la lumière.

Dans la matrice B, respectivement la matrice C, les colonnes de la matrice [IFFT] qui correspondent à des fréquences comprises entre les fréquences $- F_{max}$ et $+ F_{max}$ sont maintenues et toutes les autres colonnes qui correspondent à des fréquences situées au-delà des fréquences $- F_{max}$ et $+ F_{max}$ sont supprimées. Par exemple l'indice de la fréquence correspondant à la fréquence $F_{max}$ dans le spectre fréquentiel du signal reçu et dans la matrice [IFFT] est noté $n_F$, avec $0 < n_F < N-1$, de sorte que les colonnes de la matrice [IFFT] ayant un indice compris entre $n_F$ et $N - n_F$ soient supprimées. La matrice [IFFT] avec les colonnes supprimées est par exemple de la forme suivante :

$$[IFFT] = \begin{bmatrix} 1 & 1 & \cdots & 1 & 1 & \cdots & 1 \\ 1 & e^{\frac{+2i\pi}{N}} & \cdots & e^{\frac{+2i\pi n_F}{N}} & e^{\frac{+2i\pi(N-n_F)}{N}} & \cdots & e^{\frac{+2i\pi(N-1)}{N}} \\ \vdots & \cdots & \cdots & \cdots & \cdots & \cdots & \vdots \\ 1 & e^{\frac{+2i\pi(N-1)}{N}} & & e^{\frac{+2i\pi n_F(N-1)}{N}} & e^{\frac{+2i\pi(N-n_F)(N-1)}{N}} & & e^{\frac{+2i\pi(N-1)^2}{N}} \end{bmatrix}.$$

Dans la matrice D, les colonnes de la matrice [IFFT] qui correspondent à des fréquences comprises entre les fréquences $- 2 F_{max}$ et $+ 2 F_{max}$ sont maintenues et toutes les autres colonnes qui correspondent à des fréquences situées au-delà des fréquences $- 2 F_{max}$ et $+ 2 F_{max}$ sont supprimées.

Les limites des fréquences sont en effet doublées puisque la matrice D est homogène au produit du canal de propagation associé au signal utile et du canal de propagation associé au signal d'interférence. L'indice $n_F$ pour la matrice D est donc deux fois supérieur à l'indice $n_F$ pour la matrice B et la matrice [IFFT] pour la matrice D contient environ le double de colonnes de la matrice [IFFT] pour la matrice B.

Les colonnes des matrices B et D qui sont maintenues correspondent à des fréquences basses autour de la fréquence porteuse et inférieures à la fréquence de Doppler maximale.

Une contrainte physique du canal de propagation relative au temps est par exemple l'étalement temporel du canal de propagation limité à un retard maximum $\tau_{max}$ parmi différents retards de trajet possibles du signal reçu. Ces différents retards de trajet sont statistiquement connus en fonction de la fréquence de la porteuse du signal et de l'environnement dans lequel est transmis le signal et dont dépend l'étalement temporel du canal de propagation. Par exemple, pour une fréquence porteuse dans la bande ultra haute fréquence UHF, dans un environnement urbain, l'étalement temporel est typiquement limité à un retard maximum $\tau_{max}$ de 5 $\mu$s, et dans un environnement accidenté de type montagneux, l'étalement temporel est typiquement limité à un retard maximum $\tau_{max}$ de 15 $\mu$s.

L'étalement temporel du canal de propagation peut être augmenté du fait du traitement de certains éléments en chaîne d'émission ou de réception du signal, tels qu'un filtre radio du récepteur qui peut provoquer une dispersion temporelle supplémentaire du signal.

Dans la matrice B, respectivement la matrice C, les colonnes de la matrice [FFT] qui correspondent à des intervalles de temps compris entre les instants t = 0 et t = $\tau_{max}$ dans le profil temporel du signal reçu sont maintenues et toutes les autres colonnes qui correspondent à des retards situés au-delà de l'instant t = $\tau_{max}$ sont supprimées. Par exemple, l'indice de l'intervalle de temps correspondant à l'instant t = $\tau_{max}$ dans le spectre temporel du signal reçu et dans la matrice [FFT] est noté $m_\tau$, avec $0 < m_\tau < M-1$, de sorte que les colonnes de la matrice [FFT] ayant un indice supérieur à $m_\tau$ soient supprimées. La matrice [FFT] avec les colonnes supprimées est par exemple de la forme suivante :

$$[FFT] = \begin{bmatrix} 1 & 1 & \cdots & 1 \\ 1 & e^{\frac{-2i\pi}{M}} & \cdots & e^{\frac{-2i\pi m_\tau}{M}} \\ \vdots & \vdots & \cdots & \vdots \\ 1 & e^{\frac{-2i\pi(M-1)}{M}} & \cdots & e^{\frac{-2i\pi m_\tau(M-1)}{M}} \end{bmatrix}.$$

Dans la matrice D, les colonnes de la matrice [FFT] qui correspondent à des intervalles de temps compris entre les instants t = 0 et t = 2 $\tau_{max}$ dans le profil temporel du signal reçu sont maintenues et toutes les autres colonnes qui correspondent à des retards situés au-delà de l'instant t = 2 $\tau_{max}$ sont supprimées. Comme pour les fréquences, les limites des intervalles de temps sont doublées puisque la matrice D est homogène au produit du canal de propagation associé au signal utile et du canal de propagation associé au signal d'interférence. L'indice $m_\tau$ pour la matrice D est donc deux fois supérieur à l'indice $m_\tau$ pour la matrice B et la matrice [FFT] pour la matrice D contient environ le double de colonnes de la matrice [FFT] pour la matrice B.

Après la suppression des colonnes dans les matrices [IFFT] et [FFT], les matrices B et D contiennent N × M lignes et un nombre de colonnes inférieur à N × M.

Si les colonnes des matrices B et D sont supprimées seulement en fonction d'un paramètre de canal de propagation, seule la matrice [IFFT] ou [FFT] correspondant à la dimension associée au paramètre de canal de propagation a des colonnes supprimées, et l'autre matrice n'a pas de colonnes supprimées.

A l'étape E3, le module de réduction d'interférence MRI détermine une erreur ε sur la différence entre le signal combiné r' et le signal reçu estimé d.$w_d$ correspondant à l'estimée d du signal émis pondérée par le vecteur de pondération $w_d$ selon la relation suivante :

$$\varepsilon = R' - d.w_d,$$

soit

$$\varepsilon = R_1.w_1 + R_2.w_2 - d.w_d.$$

Le module MRI minimise cette erreur ε, ou plus précisément une fonction de cette erreur ε, qui peut être écrite sous la forme suivante :

$\varepsilon = R_1.B.a_1 + R_2.B.a_2 - d.D.a_d$, ou encore

$$\varepsilon = [R_1 \quad R_2 \quad -d] \begin{bmatrix} B & 0 & 0 \\ 0 & B & 0 \\ 0 & 0 & D \end{bmatrix} \begin{bmatrix} a_1 \\ a_2 \\ a_d \end{bmatrix},$$

ou encore.

$$\varepsilon = R.G.A,$$

avec

$$R = [R_1 \quad R_2 \quad -d], \; G = \begin{bmatrix} B & 0 & 0 \\ 0 & B & 0 \\ 0 & 0 & D \end{bmatrix}, \; \text{et } A = \begin{bmatrix} a_1 \\ a_2 \\ a_d \end{bmatrix}.$$

Dans une réalisation de l'invention, la minimisation de l'erreur $\varepsilon$ est effectuée en minimisant la norme au carré de l'erreur $\varepsilon$. Pour trouver une solution autre que la solution triviale où tous les éléments du vecteur A sont nuls, une contrainte arbitraire est déterminée.

Selon un premier exemple, une contrainte arbitraire est d'imposer le premier élément du vecteur $a_d$ égal à une constante. Plus généralement, la contrainte peut être d'imposer qu'il existe une combinaison linéaire d'éléments du vecteur A qui est égale à une constante.

Dans un cas particulier, la contrainte peut être d'imposer qu'il existe un élément du vecteur A qui est égal à une constante, ce qui peut être écrit sous la forme :

$$A^H . [J] = \gamma, \; \text{avec } [J] = [0...010...0]^H,$$

où $\gamma$ est une constante, l'exposant H désigne l'opérateur de transposition conjuguée de matrice et la position de la valeur "1" dans la matrice colonne J est placée conformément au choix de la contrainte à imposer.

Selon le même exemple, le vecteur A peut être déterminé en utilisant un multiplicateur de Lagrange noté $\lambda$. Avec les notations définies dans l'exemple précédant, la contrainte arbitraire revient à minimiser l'expression suivante :

$$\| R.G.A \|^2 - \lambda(A^H . [J] - \gamma).$$

Le vecteur A est défini par la relation suivante :

$$A = \lambda(G^H . R^H . R . G)^{-1} [J].$$

Or du fait de la contrainte, on a $A^H .[J] = \gamma$ une constante, et on obtient :

$$\lambda = \gamma / ([J]^H (G^H . R^H . R . G)^{-1} [J]),$$

et donc

$$A = \gamma(G^H . R^H . R . G)^{-1} [J]) / ([J]^H (G^H . R^H . R . G)^{-1} [J]).$$

L'invention n'est pas limitée à ces exemples et la contrainte arbitraire peut être toute autre contrainte permettant de minimiser l'erreur $\varepsilon$ en éliminant la solution où tous les éléments de la matrice A sont nuls, par exemple en minimisant l'estimée de la moyenne du taux d'erreur binaire estimé après la démodulation des symboles du signal reçu.

Le module MRI détermine ainsi tous les éléments du vecteur A en minimisant l'erreur $\varepsilon$, et déduit les vecteurs réduits $a_1$, $a_2$ et $a_d$.

A l'étape E4, le module MRI déduit de l'expression des vecteurs réduits $a_1$, $a_2$ et $a_d$ respectivement les vecteurs de pondération $w_1$, $w_2$ et $w_d$ en fonction des matrices B, C et D.

Le module MRI détermine le contenu du signal combiné r' en fonction des vecteurs de pondération $w_1$ et $w_2$ et des matrices des signaux reçus $R_1$ et $R_2$ selon la relation suivante : $R' = R_1.w_1 + R_2.w_2$.

Le module MRI estime alors les symboles du signal utile s en fonction du signal combiné r' et du vecteur de pondération $w_d$, qui représente le canal global subi par le signal r'.

Selon l'invention, la contribution du signal d'interférence u ainsi que l'influence du bruit sont réduites de manière significative et les symboles du signal utile s peuvent être estimés suite à une démodulation par le démodulateur DEM puis un décodage par le décodeur DEC des symboles du signal combiné r' comme décrit précédemment.

Les étapes E2 à E4 peuvent être itératives. Par exemple, à une première itération, l'estimée d du signal émis comprend des symboles de référence qui sont des symboles pilotes. Aux itérations suivantes, l'estimée d du signal émis comprend des symboles de référence pour lesquels le récepteur a une connaissance suffisamment fiable, tels que les symboles pilotes et des symboles estimés qui sont issus du décodage à l'étape E4 des symboles du signal combiné r' et qui ont une vraisemblance supérieure à un seuil prédéterminé.

Selon l'invention, le signal décodé dans le récepteur devient moins sensible aux interférences dues à des signaux propagés dans des canaux similaires au canal de propagation du signal reçu.

En effet, dans le cas de signaux reçus avec un signal d'interférence et sans bruit, on peut écrire pour chaque symbole d'une trame de signal OFDM, en référence aux notations décrites précédemment :

$$r_1 = \alpha_1.s + \beta_1.u,$$

et

$$r_2 = \alpha_2.s + \beta_2.u.$$

Selon l'art antérieur en référence à la figure 1, pour supprimer l'interférence présente et pour obtenir l'estimée d du signal émis égale au signal émis s, il suffit de combiner les signaux reçus de la façon suivante, sachant que la différence entre le signal r' et l'estimée d du signal émis doit être nulle :

$$r' = w_1.r_1 + w_2.r_2 = s,$$

soit

$$r' = (\beta_2.r_1 - \beta_1.r_2) / (\beta_2.\alpha_1 - \beta_1.\alpha_2),$$

avec les pondérations appliquées aux signaux respectivement reçus par les antennes de la forme :

$$w_1 = \beta_2 / (\beta_2.\alpha_1 - \beta_1.\alpha_2),$$

et

$$w_2 = -\beta_1 / (\beta_2.\alpha_1 - \beta_1.\alpha_2).$$

Selon l'art antérieur, ces termes ont donc une forme relativement complexe puisque les coefficients $\alpha_1$ et $\alpha_2$ sont relatifs à des canaux de propagation, et les vecteurs $w_1$ et $w_2$ sont homogènes à l'inverse d'un canal de transmission. Cette forme ne permet pas une résolution aisée du problème.

Le procédé selon la présente invention permet donc une approche simplifiant la résolution du problème, en permettant de le poser sous une forme linéaire.

L'invention décrite ici concerne un procédé et un récepteur pour réduire des interférences dans au moins deux signaux reçus par le récepteur à travers un canal de propagation. Selon une implémentation, les étapes du procédé de l'invention sont déterminées par les instructions d'un programme d'ordinateur incorporé dans le récepteur. Le programme comporte des instructions de programme qui, lorsque ledit programme est exécuté dans le récepteur dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

**Revendications**

1. Procédé pour réduire des interférences dans au moins deux signaux reçus par un récepteur (RE) à travers un canal de propagation, les signaux reçus comprenant chacun des symboles répartis suivant des dimensions fréquentielle et temporelle et correspondant à un même signal émis, où le procédé comprend, pour chaque trame de signal reçu, les étapes de :

   pondérer (E2) les symboles de chaque signal reçu respectivement par des coefficients d'un vecteur de pondération ($w_1$; $w_2$) associé à une antenne respective du récepteur et les symboles d'une estimée (d) du signal émis (d) par des coefficients d'un autre vecteur de pondération ($w_d$), les vecteurs de pondération ($w_1$, $w_2$, $w_d$) étant chacun un produit d'une matrice rectangulaire (B, C, D) ayant un nombre de colonnes inférieur au nombre de lignes et d'un vecteur réduit ($a_1$, $a_2$, $a_d$), les matrices étant déterminées en fonction des contraintes physiques du canal de propagation relatives à l'étalement fréquentiel et à l'étalement temporel,
   minimiser (E3) une fonction de la différence entre la somme des signaux reçus pondérés (r') et l'estimée du signal émis pondérée afin de déterminer les vecteurs réduits, et
   déterminer (E4) les vecteurs de pondération ($w_1$, $w_2$, $w_d$) en fonction des vecteurs réduits déterminés et déterminer une nouvelle estimée du signal émis en fonction des vecteurs de pondération déterminés et des signaux reçus.

2. Procédé conforme à la revendication 1, selon lequel les matrices rectangulaires (B, C) relatives aux signaux reçus sont identiques.

3. Procédé conforme à la revendication 1 ou 2, selon lequel, pour chaque trame de signal reçu, les symboles de la trame sont ordonnés depuis le premier symbole de chaque sous-porteuse du signal jusqu'au dernier symbole de la sous-porteuse, chaque sous-porteuse étant rangée après la précédente, et les matrices rectangulaires sont des matrices déduites du produit de Kronecker de première et deuxième matrices de Fourier.

4. Procédé conforme à la revendication 3, selon lequel, pour les matrices rectangulaires (B, C) relatives aux signaux reçus, les colonnes de la première matrice de Fourier correspondant à des composantes de retard temporel situées au delà d'un étalement temporel maximum, $\tau_{max}$, du canal de propagation sont supprimées, et pour la matrice rectangulaire (D) relative à l'estimée du signal émis, les colonnes de la première matrice de Fourier correspondant à des composantes de retard temporel situées au delà du double d'un étalement temporel maximum, $2\tau_{max}$, du canal de propagation sont supprimées.

5. Procédé conforme à la revendication 3 ou 4, selon lequel, pour les matrices rectangulaires (B, C) relatives aux signaux reçus, les colonnes de la deuxième matrice de Fourier correspondant à des composantes de fréquences situées en dehors d'une plage d'étalement fréquentiel du canal de propagation sont supprimées, ladite plage d'étalement fréquentiel dépendant de la fréquence Doppler, $F_{max}$, correspondant à une vitesse maximale de déplacement relatif entre un émetteur et le récepteur, et pour la matrice rectangulaire (D) relative à l'estimée du signal émis, les colonnes de la deuxième matrice de Fourier correspondant à des composantes de fréquences situées en dehors d'une plage correspondant au double d'un étalement fréquentiel du canal de propagation sont supprimées.

6. Procédé conforme à l'une des revendications 1 à 5, selon lequel l'estimée (d) du signal émis comprend des symboles pilotes.

7. Procédé conforme à l'une des revendications 1 à 6, selon lequel l'estimée (d) du signal émis comprend des estimations de symboles émis obtenues par un traitement antérieur.

8. Procédé conforme à l'une des revendications 1 à 7, selon lequel les valeurs de l'estimée (d) du signal émis sont prises en compte seulement pour certains symboles de la trame de signal reçu, et comprenant une minimisation de la fonction de la différence entre la somme des signaux reçus pondérés (r') et l'estimée du signal émis pondérée, ladite différence étant restreinte auxdits certains symboles de la trame de signal reçu.

9. Procédé conforme à l'une des revendications 1 à 8, selon lequel les étapes de pondérer, minimiser et déterminer sont itératives.

10. Procédé conforme à l'une des revendications 1 à 9, comprenant une minimisation de la somme de la norme au carrée des valeurs de la différence entre la somme des signaux reçus pondérés (r') et l'estimée du signal émis pondérée sur l'ensemble des symboles dans la trame de signal reçu, sous la contrainte qu'il existe au moins une combinaison linéaire des composantes des vecteurs réduits ($a_1$, $a_2$, $a_d$) qui est constante.

11. Procédé conforme à l'une des revendications 1 à 9, comprenant une minimisation de l'estimée de la moyenne des taux d'erreurs binaires estimés après une démodulation des symboles de la trame du signal reçu.

12. Récepteur de radiocommunication (RE) pour réduire des interférences dans au moins deux signaux ($r_1$, $r_2$) reçus par le récepteur à travers un canal de propagation, les signaux reçus comprenant chacun des symboles répartis suivant des dimensions fréquentielle et temporelle et correspondant à un même signal émis, où le récepteur comprend :

un moyen (MRI) pour pondérer les symboles de chaque signal reçu respectivement par des coefficients d'un vecteur de pondération ($w_1$; $w_2$) associé à une antenne respective du récepteur et les symboles d'une estimée (d) du signal émis par des coefficients d'un autre vecteur de pondération ($w_d$), les vecteurs de pondération ($w_1$, $w_2$, $w_d$) étant chacun un produit d'une matrice rectangulaire (B, C, D) ayant un nombre de colonnes inférieur au nombre de lignes et d'un vecteur réduit ($a_1$, $a_2$, $a_d$), les matrices étant déterminées en fonction des contraintes physiques du canal de propagation relatives à l'étalement fréquentiel et à l'étalement temporel,
un moyen (MRI) pour minimiser une fonction de la différence entre la somme des signaux reçus pondérés (r') et l'estimée du signal émis pondérée afin de déterminer les vecteurs réduits, et
un moyen (MRI) pour déterminer les vecteurs de pondération ($w_1$, $w_2$, $w_d$) en fonction des vecteurs réduits déterminés et déterminer une nouvelle estimée du signal émis en fonction des vecteurs de pondération déterminés et des signaux reçus.

13. Programme d'ordinateur apte à être mis en oeuvre dans un récepteur (RE) pour réduire des interférences dans au moins deux signaux ($r_1$, $r_2$) reçus par le récepteur à travers un canal de propagation, les signaux reçus comprenant chacun des symboles répartis suivant des dimensions fréquentielle et temporelle et correspondant à un même signal émis, où ledit programme comprend des instructions qui, lorsque le programme est exécuté dans ledit récepteur, réalisent les étapes de :

pondérer (E2) les symboles de chaque signal reçu respectivement par des coefficients d'un vecteur de pondération ($w_1$; $w_2$) associé à une antenne respective du récepteur et les symboles d'une estimée (d) du signal émis (d) par des coefficients d'un autre vecteur de pondération ($w_d$), les vecteurs de pondération ($w_1$, $w_2$, $w_d$) étant chacun un produit d'une matrice rectangulaire (B, C, D) ayant un nombre de colonnes inférieur au nombre de lignes et d'un vecteur réduit ($a_1$, $a_2$, $a_d$), les matrices étant déterminées en fonction des contraintes physiques du canal de propagation relatives à l'étalement fréquentiel et à l'étalement temporel,
minimiser (E3) une fonction de la différence entre la somme des signaux reçus pondérés (r') et l'estimée du signal émis pondérée afin de déterminer les vecteurs réduits, et
déterminer (E4) les vecteurs de pondération ($w_1$, $w_2$, $w_d$) en fonction des vecteurs réduits déterminés et déterminer une nouvelle estimée du signal émis en fonction des vecteurs de pondération déterminés et des signaux reçus.

**Patentansprüche**

1. Verfahren, um Interferenzen in mindestens zwei Signalen, die von einem Empfänger (RE) über einen Ausbreitungskanal empfangen werden, zu verringern, wobei die empfangenen Signale jeweils Symbole umfassen, die nach Frequenz- und Zeitdimensionen verteilt sind und einem selben entsandten Signal entsprechen, wobei das Verfahren für jeden empfangenen Signalraster die folgenden Schritte umfasst:

- Gewichten (E2) der Symbole jedes empfangenen Signals jeweils durch Koeffizienten eines Gewichtungsvektors (w₁; w₂), der einer jeweiligen Antenne des Empfängers zugeordnet ist, und der Symbole einer Schätzung (d) des entsandten Signals durch Koeffizienten eines weiteren Gewichtungsvektors (w_d), wobei die Gewichtungsvektoren (w₁, w₂, w_d) jeweils ein Produkt einer rechteckigen Matrix (B, C, D) mit einer kleineren Anzahl von Spalten als Anzahl von Zeilen und eines verringerten Vektors (a₁, a₂, a_d) ist, wobei die Matrizes in Abhängigkeit von den physischen Anforderungen des Ausbreitungskanals im Zusammenhang mit der Frequenzverteilung und der Zeitverteilung bestimmt werden,
- Minimieren (E3) einer Funktion der Differenz zwischen der Summe der gewichteten empfangenen Signale (r') und der Schätzung des gewichteten entsandten Signals, um die verringerten Vektoren zu bestimmen, und
- Bestimmen (E4) der Gewichtungsvektoren (w₁, w₂, w_d) in Abhängigkeit von den bestimmten verringerten Vektoren und Bestimmen einer neuen Schätzung des entsandten Signals in Abhängigkeit von den bestimmten Gewichtungsvektoren und den empfangenen Signalen.

2. Verfahren nach Anspruch 1, bei dem die rechteckigen Matrizes (B, C), die sich auf die empfangenen Signale beziehen, identisch sind.

3. Verfahren nach Anspruch 1 oder 2, bei dem für jeden empfangenen Signalraster die Symbole des Rasters von dem ersten Symbol jeder Unterträgerfrequenz des Signals bis zum letzten Symbol der Unterträgerfrequenz geordnet sind, wobei jede Unterträgerfrequenz nach der vorhergehenden gereiht ist, und die rechteckigen Matrizes derartige Matrizes sind, die von dem Kronecker-Produkt der ersten und zweiten Fourier-Matrizes abgeleitet sind.

4. Verfahren nach Anspruch 3, bei dem für die rechteckigen Matrizes (B, C), die sich auf die empfangenen Signale beziehen, die Spalten der ersten Fourier-Matrix, die Zeitverzögerungskomponenten entsprechen, die sich über einer maximalen Zeitverteilung $\tau_{max}$ des Ausbreitungskanals befinden, weggelassen werden, und für die rechteckige Matrix (D), die sich auf die Schätzung des entsandten Signals bezieht, die Spalten der ersten Fourier-Matrix, die Zeitverzögerungskomponenten entsprechen, die sich über dem Zweifachen einer maximalen Zeitverteilung $2\tau_{max}$ des Ausbreitungskanals befinden, weggelassen werden.

5. Verfahren nach Anspruch 3 oder 4, bei dem für die rechteckigen Matrizes (B, C), die sich auf die empfangenen Signale beziehen, die Spalten der zweiten Fourier-Matrix, die Frequenzkomponenten entsprechen, die sich außerhalb eines Frequenzverteilungsbereichs des Ausbreitungskanals befinden, weggelassen werden, wobei der Frequenzausbreitungskanal von der Doppler-Frequenz $F_{max}$ abhängt, die einer maximalen relativen Bewegungsgeschwindigkeit zwischen einem Sender und einem Empfänger entspricht, und für die rechteckige Matrix (D), die sich auf die Schätzung des entsandten Signals bezieht, die Spalten der zweiten Fourier-Matrix, die Frequenzkomponenten entsprechen, die sich außerhalb eines Bereichs entsprechend dem Doppelten einer Frequenzverteilung des Ausbreitungskanals befinden, weggelassen werden.

6. Verfahren nach einem der Ansprüche 1 bis 5, bei dem die Schätzung (d) des entsandten Signals Pilotsymbole umfasst.

7. Verfahren nach einem der Ansprüche 1 bis 6, bei dem die Schätzung (d) des entsandten Signals Schätzungen von entsandten Symbolen, die von einer früheren Bearbeitung erhalten wurden, umfasst.

8. Verfahren nach einem der Ansprüche 1 bis 7, bei dem die Werte der Schätzung (d) des entsandten Signals nur für gewisse Symbole des empfangenen Signalrasters berücksichtigt werden, und umfassend eine Minimierung der Funktion der Differenz zwischen der Summe der gewichteten empfangenen Signale (r') und der Schätzung des gewichteten entsandten Signals, wobei die Differenz auf die gewissen Symbole des Rasters des empfangenen Signals beschränkt ist.

9. Verfahren nach einem der Ansprüche 1 bis 8, bei dem die Schritte des Gewichtens, Minimierens und Bestimmens iterativ sind.

10. Verfahren nach einem der Ansprüche 1 bis 9, umfassend eine Minimierung der Summe der Norm zum Quadrat der Werte der Differenz zwischen der Summe der gewichteten empfangenen Signale (r') und der Schätzung des gewichteten entsandten Signals zur Gesamtheit der Symbole in dem Raster des empfangenen Signals unter der Voraussetzung, dass mindestens eine lineare Kombination der Komponenten der verringerten Vektoren (a₁, a₂, a_d) vorhanden ist, die konstant ist.

**EP 2 220 803 B1**

**11.** Verfahren nach einem der Ansprüche 1 bis 9, umfassend eine Minimierung der Schätzung des Durchschnitts der geschätzten binären Fehlerquoten nach einer Demodulation der Symbole des Rasters des empfangenen Signals.

**12.** Funkkommunikationsempfänger (RE) zur Verringerung der Interferenzen in mindestens zwei von dem Empfänger über einen Ausbreitungskanal empfangenen Signalen ($r_1$, $r_2$), wobei die empfangenen Signale jeweils Symbole umfassen, die nach Frequenz- und Zeitdimensionen verteilt sind und einem selben entsandten Signal entsprechen, wobei der Empfänger umfasst:

- ein Mittel (MRI) zum Gewichten der Symbole jedes empfangenen Signals jeweils durch Koeffizienten eines Gewichtungsvektors ($w_1$; $w_2$), der einer jeweiligen Antenne des Empfängers zugeordnet ist, und der Symbole einer Schätzung (d) des entsandten Signals durch Koeffizienten eines weiteren Gewichtungsvektors ($w_d$), wobei die Gewichtungsvektoren ($w_1$, $w_2$, $w_d$) jeweils ein Produkt einer rechteckigen Matrix (B, C, D) mit einer kleineren Anzahl von Spalten als Anzahl von Zeilen und eines verringerten Vektors ($a_1$, $a_2$, $a_d$) ist, wobei die Matrizes in Abhängigkeit von den physischen Anforderungen des Ausbreitungskanals im Zusammenhang mit der Frequenzverteilung und der Zeitverteilung bestimmt werden,
- ein Mittel (MRI) zum Minimieren einer Funktion der Differenz zwischen der Summe der gewichteten empfangenen Signale (r') und der Schätzung des gewichteten entsandten Signals, um die verringerten Vektoren zu bestimmen, und
- ein Mittel (MRI) zum Bestimmen der Gewichtungsvektoren ($w_1$, $w_2$, $w_d$) in Abhängigkeit von den bestimmten verringerten Vektoren und Bestimmen einer neuen Schätzung des entsandten Signals in Abhängigkeit von den bestimmten Gewichtungsvektoren und den empfangenen Signalen.

**13.** Computerprogramm, das geeignet ist, in einem Empfänger (RE) zur Verringerung der Interferenzen in mindestens zwei Signalen ($r_1$, $r_2$), die von dem Empfänger über einen Ausbreitungskanal empfangen werden, eingesetzt zu werden, wobei die empfangenen Signale jeweils Symbole umfassen, die nach Frequenz- und Zeitdimensionen verteilt sind und einem selben entsandten Signal entsprechen, wobei das Programm Befehle umfasst, die, wenn das Programm in dem Empfänger ausgeführt wird, die folgenden Schritte durchführen:

- Gewichten (E2) der Symbole jedes empfangenen Signals jeweils durch Koeffizienten eines Gewichtungsvektors ($w_1$; $w_2$), der einer jeweiligen Antenne des Empfängers zugeordnet ist, und der Symbole einer Schätzung (d) des entsandten Signals (d) durch Koeffizienten eines weiteren Gewichtungsvektors ($w_d$), wobei die Gewichtungsvektoren ($w_1$, $w_2$, $w_d$) jeweils ein Produkt einer rechteckigen Matrix (B, C, D) mit einer kleineren Anzahl von Spalten als Anzahl von Zeilen und eines verringerten Vektors ($a_1$, $a_2$, $a_d$) ist, wobei die Matrizes in Abhängigkeit von den physischen Anforderungen des Ausbreitungskanals im Zusammenhang mit der Frequenzverteilung und der Zeitverteilung bestimmt werden,
- Minimieren (E3) einer Funktion der Differenz zwischen der Summe der gewichteten empfangenen Signale (r') und der Schätzung des gewichteten entsandten Signals, um die verringerten Vektoren zu bestimmen, und
- Bestimmen (E4) der Gewichtungsvektoren ($w_1$, $w_2$, $w_d$) in Abhängigkeit von den bestimmten verringerten Vektoren und Bestimmen einer neuen Schätzung des entsandten Signals in Abhängigkeit von den bestimmten Gewichtungsvektoren und den empfangenen Signalen.

**Claims**

**1.** A method for reducing interferences in at least two signals received by a receiver (RE) through a propagation channel, the received signals each including symbols distributed according to frequency and time dimensions and corresponding to a common emitted signal, in which method includes, for each received signal frame, the steps of:

weighting (E2) the symbols of each received signal respectively by coefficients of a weighting vector ($w_1$, $w_2$) associated with a respective antenna of the receiver and the symbols of an estimate (d) of the emitted signal (d) by coefficients of another weighting vector ($w_d$), the weighting vectors ($w_1$, $w_2$, $w_d$) each being a product of a rectangular matrix (B, C, D) having a number of columns lower than the number of rows and a reduced vector ($a_1$, $a_2$, $a_d$), the matrices being determined as a function of physical constraints of the propagation channel relating to frequency spreading and time spreading,
minimizing (E3) a function of the difference between the sum of the weighted received signals (r') and the weighted estimate of the emitted signal in order to determine the reduced vectors, and
determining (E4) the weighting vectors as a function of the determined reduced vectors ($w_1$, $w_2$, $w_d$) and determining a new estimation of the emitted signal as a function of the determined weighting vectors and the received signals.

2. A method as claimed in claim 1, wherein the rectangular matrices (B, C) relating to the received signals are identical.

3. A method as claimed in claim 1 or 2, wherein, for each received signal frame, the symbols of the frame are arranged from the first symbol of each subcarrier of the signal to the last symbol of the subcarrier, each subcarrier being ranked after the previous one, and the rectangular matrices are matrices deriving from the Kronecker product of first and second Fourier matrices.

4. A method as claimed in claim 3, wherein, for the rectangular matrices (B, C) relating to the received signals, the columns of the first Fourier matrix corresponding to time delay components located beyond a maximum time spreading $T_{max}$ of the propagation channel are suppressed, and for the rectangular matrix (D) relating to the estimate of the emitted signal, the columns of the first Fourier matrix corresponding to time delay components located beyond a twofold maximum time spreading $2T_{max}$ of the propagation channel are suppressed.

5. A method as claimed in claim 3 or 4, wherein, for the rectangular matrices (B, C) relating to the received signals, the columns of the second Fourier matrix corresponding to the frequency components located outside a frequency spreading range of the propagation channel are suppressed, said frequency spreading range being dependent on the Doppler frequency $F_{max}$ corresponding to a maximum speed of relative displacement between an emitter and the receiver, and for the rectangular matrix (D) relating to the estimate of the emitted signal, the columns of the second Fourier matrix corresponding to frequency components located outside a range corresponding to a twofold frequency spreading of the propagation channel are suppressed.

6. A method as claimed in any one of claims 1 to 5, wherein the estimate (d) of the emitted signal includes pilot symbols.

7. A method as claimed in any one of claims 1 to 6, wherein the estimate (d) of the emitted signal includes estimations of emitted symbols obtained in a previous processing.

8. A method as claimed in any one of claims 1 to 7, wherein the values of the estimate (d) of the emitted signal are taken into account only for some symbols of the received signal frame, and including minimizing the function of the difference between the sum of the weighted received signals (r') and the weighted estimate of the emitted signal, said difference being limited to said some symbols of the received signal frame.

9. A method as claimed in any one of claims 1 to 8, wherein the weighting, minimizing and determining steps are iterative.

10. A method as claimed in any one of claims 1 to 9, including minimizing the sum of the squared standard of the values of the difference between the sum of the weighted received signals (r') and the weighted estimate of the emitted signal for all the symbols in the received signal frame, under the constraint that there is at least one linear combination of the components of the reduced vectors ($a_1$, $a_2$, $a_d$) which is constant.

11. A method as claimed in any one of claims 1 to 9, including minimizing the estimation of the average of binary error rates estimated after demodulating symbols in the received signal frame.

12. A radio communication receiver (RE) for reducing interferences in at least two signals ($r_1$, $r_2$) received by the receiver through a propagation channel, the received signals each including symbols distributed according to frequency and time dimensions, and corresponding to a common emitted signal, in which the receiver includes:

means (MRI) for weighting the symbols of each received signal respectively by coefficients of a weighting vector ($w_1$, $w_2$) associated with a respective antenna of the receiver and the symbols of an estimate (d) of the emitted signal by coefficients of another weighting vector ($w_d$), the weighting vectors ($w_1$, $w_2$, $w_d$) being each a product of a rectangular matrix (B, C, D) having a number of columns lower than the number of rows and a reduced vector ($a_1$, $a_2$, $a_d$), the matrices being determined as a function of physical constraints of the propagation channel relating to frequency spreading and time spreading,
means (MRI) for minimizing a function of the difference between the sum of the weighted received signals (r') and the weighted estimate of the emitted signal in order to determine the reduced vectors, and
means (MRI) for determining the weighting vectors ($w_1$, $w_2$, $w_d$) as a function of the determined reduced vectors and determining a new estimation of the emitted signal as a function of the determined weighting vectors and the received signals.

**13.** A computer program adapted to be implemented in a receiver (RE) for reducing interferences in at least two signals ($r_1$, $r_2$) received by a receiver (RE) through a propagation channel, the received signals each including symbols distributed according to frequency and time dimensions and corresponding to a common emitted signal, in which said program includes program instructions which carry out the following steps when said program is executed in said receiver:

weighting (E2) the symbols of each received signal respectively by coefficients of a weighting vector ($w_1$, $w_2$) associated with a respective antenna of the receiver and the symbols of an estimate (d) of the emitted signal (d) by coefficients of another weighting vector ($w_d$), the weighting vectors ($w_1$, $w_2$, $w_d$) each being a product of a rectangular matrix (B, C, D) having a number of columns lower than the number of rows and a reduced vector ($a_1$, $a_2$, $a_d$), the matrices being determined as a function of physical constraints of the propagation channel relating to frequency spreading and time spreading,

minimizing (E3) a function of the difference between the sum of weighted received signals (r') and the weighted estimate of the emitted signal in order to determine the reduced vectors, and

determining (E4) the weighting vectors as a function of the determined reduced vectors ($w_1$, $w_2$, $w_d$) and determining a new estimation of the emitted signal as a function of the determined weighting vectors and the received signals.

FIG. 1

FIG. 2

# FIG. 3

# FIG. 4

E1 — RE, ME, CTF : $r_1$, $r_2$

E2 — MRI : $r_1(w_1)$, $r_2(w_2)$, $d(w_d)$, $w_1(B, a_1)$, $w_2(C, a_2)$, $w_d(D, a_d)$

E3 — MRI : $\varepsilon(r_1, r_2, d) \rightarrow a_1, a_2, a_d$

E4 — MRI : $a_1, a_2, a_d \rightarrow w_1, w_2, w_d \rightarrow s$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JOONBEOM KIM et al.** Robust V-blast MIMO-OFDM channel estimators in time-varying channels using iterative Wiener filters. *Global Telecommunications Conference,* 08 Novembre 2005, vol. 6, ISBN 978-0-7803-9414-8, 3917-3921